(19) Europäisches Patentamt

European Patent Office

Office européen des brevets

(11) **EP 4 768 717 A1**

(12) **EUROPEAN PATENT APPLICATION**

(43) Date of publication:
**01.07.2026 Bulletin 2026/27**

(21) Application number: **24307344.2**

(22) Date of filing: **31.12.2024**

(51) International Patent Classification (IPC):
**F03D 7/02** *(2006.01)* **F03D 7/04** *(2006.01)*

(52) Cooperative Patent Classification (CPC):
**F03D 7/0204; F03D 7/046; F03D 7/049;**
F05B 2260/821; F05B 2260/84; F05B 2270/1033;
F05B 2270/20; F05B 2270/32; F05B 2270/321

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TotalEnergies OneTech**
 **92400 Courbevoie (FR)**
• **Institut Mines Telecom**
 **91120 Palaiseau (FR)**

(72) Inventors:
• **KADOCHE, Elie**
 **92400 Courbevoie (FR)**
• **CARTON, Florence**
 **92400 Courbevoie (FR)**
• **REYNAUD, Nils**
 **92400 Courbevoie (FR)**
• **BIANCHI, Pascal**
 **91120 Palaiseau (FR)**
• **CIBLAT, Philippe**
 **91120 Palaiseau (FR)**

(74) Representative: **Lavoix**
 **2, place d'Estienne d'Orves**
 **75441 Paris Cedex 09 (FR)**

(54) **A METHOD FOR CONTROLLING A WIND FARM, RELATED COMPUTER PROGRAM PRODUCT AND CONTROL SYSTEM**

(57) The invention relates to a control method (100) for controlling a wind farm comprising a plurality of wind turbines, based on wind velocity direction.

The method (100) comprising a learning phase (1100) and an exploitation phase (1200).

The learning phase comprises obtaining (1110) a wind direction, a wind velocity, sets of yaw angle values and a parameterized model configured to determine a rotation command. The learning phase further comprises determining (1130) an ordered list of wind turbines, and training (1140) of the parametrized model according to a reinforcement learning algorithm.

The reinforcement learning algorithm comprising several iterations determining rotations command based on the parameterized model, performed sequentially on the wind turbines according to the ordered list of wind turbines.

The exploitation phase comprising applying (1230) the trained model to each wind turbine to obtain rotation commands, and sending (1240) them to the wind turbines.

FIG.5

# EP 4 768 717 A1

**Description**

The present invention concerns a control method for controlling a wind farm.

The present invention in addition concerns a set of computer program products and an electronic control system configured to implement such a method.

The present invention concerns the domain of piloting the orientation of wind turbines within a wind farm to improve its productivity.

The productivity of a wind turbine, i.e. the generated power, depends mainly on the velocity of the wind and its direction with respect to the wind turbine.

In particular, a wind turbine only produces energy if the wind reaching the wind turbine has a direction and a velocity within specific respective ranges. In particular, it is known that the optimal wind production is reached when the wind turbine is facing the wind direction and when the wind velocity is neither too high, nor too small.

Thus, to improve the production of the wind turbine, it is known to control its yaw angle, i.e. its rotation along an elongation axis of the wind turbine, via a yaw actuator, to try to reach an optimal velocity and direction of the wind on blades of the wind turbine.

When considering a farm of wind turbines, it is known to measure the wind velocity and direction at a point close to the wind farm. From this measurement, it is known apply a control technique, at each time instant, consisting in commanding the yaw angle of each turbine to have each wind turbine tracking said measured wind direction.

However, this technique faces main issues that make it strongly suboptimal.

Firstly, wind turbines are massive elements, so that the variation of their yaw angle cannot be greater than a certain threshold, e.g. few degrees by minute. Thus, if the wind direction is changing rapidly, it is not possible for the wind turbine to track such changes properly. In other words, in this case, the yaw actuators are always late compared the wind changes. Thus, at each time, the wind turbines do not have the appropriate yaw angle, with respect to the wind direction.

In addition, when wind reaches a wind turbine, said wind turbine extracts energy for the wind, thus creating perturbations in the downstream wind, mainly in the form of turbulences, and slowing down of the wind velocity. Such phenomenon is known as wake effect. Hence, the optimal direction of a wind turbine, which is located downstream, with respect to the wind is not always facing the direction of the wind reaching the wind farm.

To evaluate the performances of a wind farm, it exists some simulators that can estimate the power generated by a wind farm from given values of wind directions, wind velocity, and orientation of each wind turbine.

However, such a simulator only makes it possible to evaluate the performance but does not provide, on its own, a method to choose the appropriate orientation of the wind turbines

It thus exists a need to provide a method that makes it possible to take into consideration these main issues, to provide easily control command of the wind turbine that would improve the production of the wind farm.

The present invention proposes a control method for controlling a wind farm comprising a plurality of wind turbines, based on a wind velocity and a wind direction, each wind turbine having an orientation forming, with the wind direction, an angle denoted yaw angle, each wind turbine being configured, upon receiving a rotation command, to rotate, around an elongation axis respective of the wind turbine, according to said rotation command to modify its yaw angle,

the method being implemented by an electronic control system and comprising a learning phase including the following steps:

- obtaining the wind direction, the wind velocity, sets of yaw angle values, each set of yaw angle values comprising a yaw angle value respective of each wind turbine, and a parameterized model configured to determine a rotation command for a specific wind turbine as a function of a yaw angle value of each wind turbine
- determining an ordered list of wind turbines of the wind farm based on the wind direction, and
- training of the parametrized model according to a reinforcement learning algorithm based on the obtained wind velocity an wind direction, to maximize a power generated by the wind farm,
  the reinforcement learning algorithm comprising several iterations, each of them including determining, for each turbine, a respective rotation command based on the parameterized model, such determination being performed sequentially on the wind turbines according to the ordered list of wind turbines,

the model resulting from the training step being further denoted trained model,
the method in addition comprising an exploitation phase including the following steps:

- receiving the current yaw angle of each wind turbine,
- applying the trained model to each wind turbine, based on the received current yaw angles to obtain a rotation command respective of each wind turbine, and
- sending each rotation command to the respective wind turbine for the rotation of the wind turbines.

According to specific embodiments of the invention, the control method comprises one or more of the following features, taken solely, or according to any feasible combination:

- during the obtaining step, a geographic configuration of the wind farm is obtained, said geographic configuration including coordinates of each wind turbine of the wind farm with respect to each other wind turbines,
  during the determining step, the ordered list comprising the list of wind turbines in the order in which the wind, following the wind direction, reaches them in the geographic configuration;
- the parameterized model is a neural network;
- the model is configured to determine the rotation command among a predefined set of possible rotation commands, the parameterized model being preferably configured to determine for each rotation command of the set of possible rotation command, a respective probability of choosing said rotation command, the chosen rotation command being the rotation command with the highest probability;
- the training step comprises a sub step of forming training data and a sub step of training the parametrized model based on the training data,
  the sub step of forming the training data comprising the following actions that are iterated for each set of yaw angle values:

  ○ for each wind turbine in the sequence of the ordered list, forming a decision tree, starting from the considered wind turbine, comprising several levels of nodes, and branches connecting a node from a lower level to a node of the corresponding upper level,

    each level corresponding to a respective wind turbine, the levels being order as in the order list,
    each decision tree associating, to its first node, a quantifier representative of a power generated by the wind farm, and a vector of probabilities,
    the vector of probabilities being determined based on the corresponding decision tree, and comprising for each rotation command of the set of possible rotation commands, a probability of choosing said command,

  ○ determining for each decision tree, respective training data comprising as input

    ▪ yaw angle values derived from the considered set of yaw angle values and from the decision tree
    ▪ an indicator of the wind turbine relative to which the decision tree is formed

  and as output:

    ▪ the vector of probabilities, and
    ▪ the quantifier associated to the first node of decision tree relative to the last wind turbine in the ordered list;

- the forming action is performed based on a tree search technic, derived from the Monte Carlo Tree Search technic;
- during the forming action the tree search technic comprises visiting several nodes of the decision tree, the vector of probabilities associated to said decision tree depending on the number of visits of each node of the second level;
- during the forming action, the tree search technic comprises visiting successive nodes of the decision tree by selecting several rotation commands until a predetermined stopping criterion is met, thus defining a path in the decision tree, said selection being based on the parametrized model,

  the tree search technic further comprising determining a value for each path based on the parameterized model
  the tree search technic further comprising updating the quantifier associated to the first node based on the determined values;

- for each wind turbine except the first one in the ordered list, during the forming action, when determining the power generated by the wind farm, the rotation command considered for wind turbine(s) preceding the considered one is(are) equal to the rotation command with the highest value in the vector of probabilities associated to the decision tree of said preceding wind turbine;
- during the applying step of the exploitation phase, the trained model is applied sequentially to the wind turbines in the order of the ordered list;
- during the obtaining step, a plurality of wind directions and wind velocities are obtained,

  the parametrized model further taking as input, the wind direction and the wind velocity,
  during the learning phase, the determining step being iterated for each wind direction and the training step being iterated for each couple of wind direction and wind velocity,
the operating phase further comprising:

- receiving current values of wind direction and wind velocity,
- based the received current values, selecting the ordered list corresponding to the current wind direction,

during the applying step, the trained model being applied in the sequence of the selected ordered list. The present invention also concerns a computer program product comprising instructions which, when being executed by a computer, implement such a control method.

The present invention also concerns an electronic control system for controlling a wind farm comprising a plurality of wind turbines, based on a wind velocity and a wind direction, each wind turbine having an orientation forming, with the wind direction, an angle denoted yaw angle,

each wind turbine being configured, upon receiving a rotation command, to rotate, around an elongation axis respective of the wind turbine, according to said rotation command to modify its yaw angle,
the electronic control system comprising an electronic learning device comprising:

- a first receiving module configured to obtain the wind direction, the wind velocity, sets of yaw angle values, each set of yaw angle values comprising a yaw angle value respective of each wind turbine, and a parameterized model configured to determine a rotation command for a specific wind turbine as a function of a yaw angle value of each wind turbine,
- a first calculating module configured to determine an ordered list of wind turbines of the wind farm based on the wind direction,

the first calculating module being further configured to train the parametrized model according to a reinforcement learning algorithm based on the obtained wind velocity an wind direction, to maximize a power generated by the wind farm,
the reinforcement learning algorithm comprising several iterations, each of them including determining, for each turbine, a respective rotation command based on the parameterized model, such determination being performed sequentially on the wind turbines according to the ordered list of wind turbines,

the model resulting from the training step being further denoted trained model,
the electronic control system further comprising an electronic control device comprising:

- a second receiving module configured to receive the current yaw angle of each wind turbine,
- a second calculating module configured to apply the trained model to each wind turbine, based on the received current yaw angles to obtain a rotation command respective of each wind turbine, and
- a sending module configured to send each rotation command to the respective wind turbine for the rotation of the wind turbines.

The invention will be better understood upon reading the following description, only given as an example of embodiments of the invention, and in reference to the attached Figures, among which:

- Figure 1 is schematic view of wind farm comprising an electronic control device, according to the invention, for a controlling the wind farm;
- Figure 2 is a front view of a wind turbine belonging to the wind farm of Figure 1;
- Figure 3 is schematic top view of a wind turbine belonging to the wind farm of Figure 1;
- Figure 4 is a schematic top view of the wind farm according to Figure 1;
- Figure 5 is a flowchart of a control method implemented by the electronic control device represented in Figure 1; and
- Figure 6 illustrates schematically an action implemented during the control method represented in Figure 5,
- Figure 7 illustrates schematically another action implemented during the control method represented in Figure 5, and
- Figure 8 illustrates schematically still another action implemented during the control method represented in Figure 5.

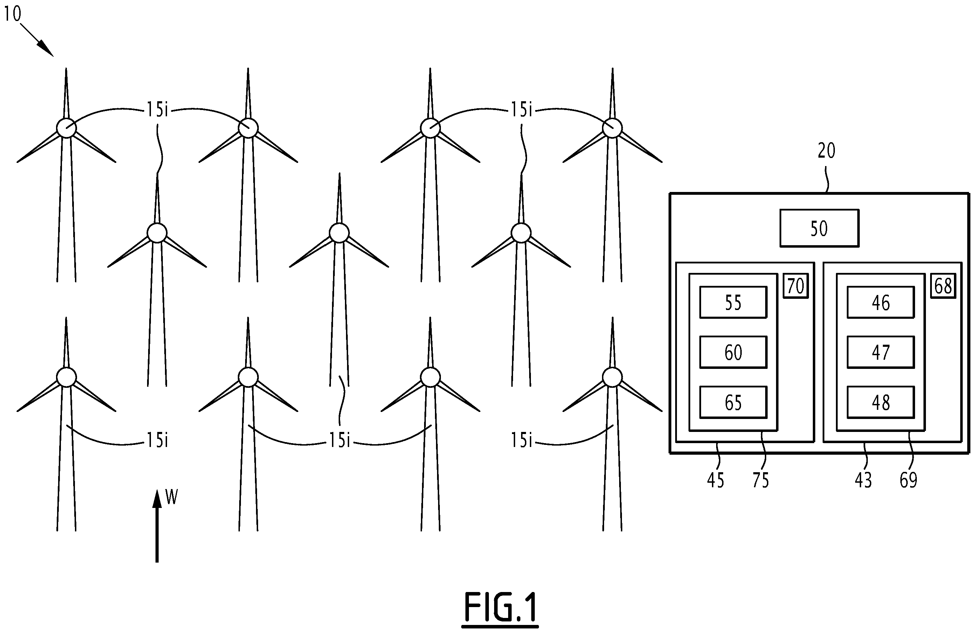

In Figure 1 is represented a wind farm 10. The wind farm 10 is for example on offshore wind farm. Alternatively, the wind farm 10 is an onshore wind farm.
The wind farm 10 comprises several wind turbines 15i, for example a number J of wind turbines 15i, with "i" evolving from 1 to J, and a control system 20. The number J is at least two, for example greater than ten, twenty, fifty or even a hundred.

As represented in Figure 1, the wind turbines 15i of the wind farm 10 are for example bottom-fixed wind turbines, i.e. wind turbines comprising a monopile solidly fixed to the ground, or to the seabed in case of offshore wind turbine.

According to a non-shown variant, and only in the case of an offshore wind farm, the wind turbines are floating wind turbines, i.e. each wind turbine comprises a foundation floating on a water body and bearing the rest of the wind turbine.

Alternatively, and only in case of an offshore wind farm, the wind farm is mixed, comprising both bottom-fixed and floating wind turbines.

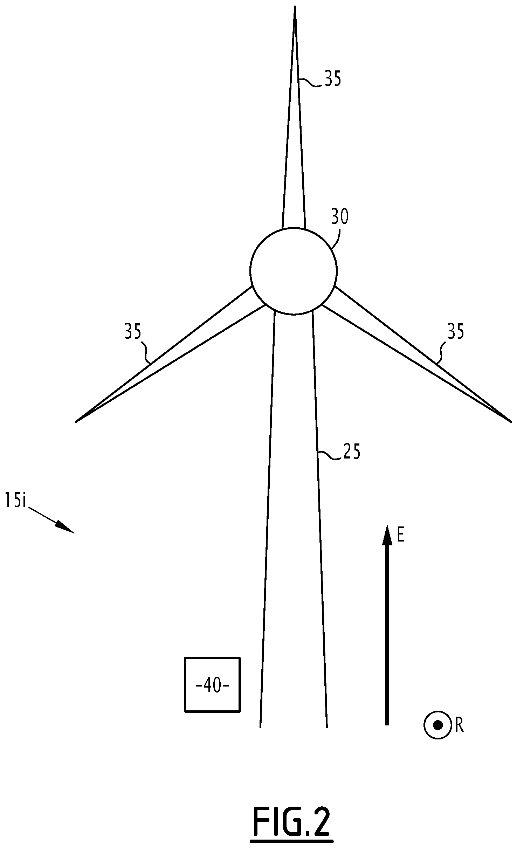

Figure 2 represents a front view of one wind turbine 15i of the wind farm 10.

The wind turbine 15i comprises a tower 25 extending along an elongation axis E.

The wind turbine 15i in addition comprises a rotor 30, for example located at an extremity of the tower 25. The rotor 30 comprises blades 35 configured to rotate around a rotation axis R, which is sensibly perpendicular to the elongation axis E.

In a known manner, the blades 35 are configured to be driven in rotation around the rotation axis R, by the wind W flowing through the wind turbine 15i. Then, under the effect of wind, the blades drive the rotor in rotation around the rotation axis R, thus producing electricity.

The wind turbine 15i in addition comprises a yaw actuator 40 connected to the control system 20.

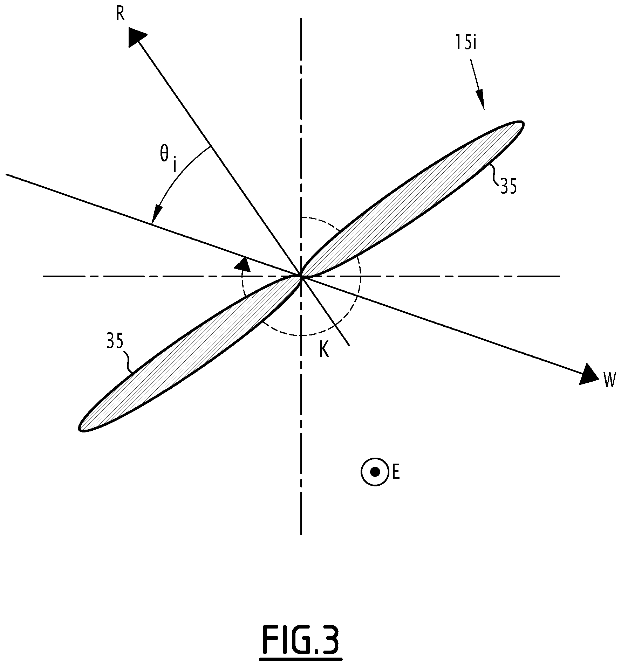

In reference to Figure 3, the yaw actuator 40 is configured, upon receiving a rotation command $u_i$ from the control system 20, to make the wind turbine 15i, or at least its rotor 30, rotate around the elongation axis E by an angle defined in the received rotation command $u_i$, so that the rotor 30 reaches a yaw angle $\theta_i$.

The yaw angle $\theta_i$ is here defines as an angle formed between an orientation of the wind turbine, i.e. the direction in which the rotation axis R is pointing, and the wind direction K.

Back to Figure 1, the control system 20 comprises an electronic learning device 43, an electronic control device 45 and preferably a wind sensor 50.

The electronic learning device 43 is preferably geographically remote from the rest of the wind farm 10. The electronic learning device 43 is preferably remotely connected to the electronic control device 45. $\theta_i$

The electronic learning device 43 preferably comprises a first receiving module 46, a first calculating module 47 and a first sending module 48.

The control device 45 is preferably located on the wind farm 10 location, close the wind turbines 15i. The electronic control device 45 is connected to the electronic learning device 43, to each wind turbine 15i and preferably to the wind sensor 50.

The control device 45 comprises a second receiving module 55, a second calculating module 60 and a second sending module 65.

The optional wind sensor 50 is configured to estimate the wind velocity V and direction K on the wind farm 10.

In the present application, the term "estimated" is used to mean both measured and predicted.

In particular, the wind sensor 50 is preferably configured to measure the wind velocity V and wind direction K, or to predict the wind velocity V and direction K, via known forecast techniques.

In the example shown in Figure 1, the learning device 43 is a computer. It comprises a processor 68 and a memory 69. In this example, the control device 45 is a computer. It comprises a processor 70 and a memory 75 associated with the processor 70.

In the example shown in Figure 1, the first receiving module 46, the first calculating module 47, the first sending module 48, the second receiving module 55, the second calculating module 60, and second the sending module 65, are each implemented in the form of software, or a software brick, and can be executed respectively by the processor 68 or 70. The memory 69 of the learning device 43 is then able to store a first receiving software, a first calculating software, and a first sending software. The memory 75 of the control device 45 is then able to store a second receiving software, a second calculating software, and a second sending software.

When the learning device 43 and the control device 45 are implemented in the form of one or more software programs, i.e. in the form of a computer program, they can also be recorded on a respective computer-readable medium (not shown). The computer-readable media are, for example, media capable of storing electronic instructions and of being coupled to a bus of a computer system. By way of example, the readable media are an optical disk, a magneto-optical disk, a ROM memory, a RAM memory, any type of nonvolatile memory (e.g. EPROM, EEPROM, FLASH, NVRAM), a magnetic card or an optical card. For each device 43, 45, a computer program containing software instructions is stored on the readable medium.

Alternatively, and not shown here, the first receiving module 46, the first calculating module 47, the first sending module 48, the second receiving module 55, the second calculating module 60, and second the sending module 65, are each implemented in the form of a programmable logic component, such as an FPGA (Field Programmable Gate Array), or an integrated circuit, such as an ASIC (Application Specific Integrated Circuit).

The first receiving module 46 is configured to obtain a wind direction K and a wind velocity V. These wind direction K and velocity V are for instance provided from an external system.

Preferably, the first receiving module 46 is configured to obtain a plurality of wind directions K and wind velocities *V*. As an example, a predetermined interval of wind velocities is discretized with a predefined discretization step, thus forming the plurality of wind velocities *V*. Similarly, in this example, the interval between 0 and 360°, or between - 180° and 180°, is discretized with a predefined respective discretization step, thus forming the plurality of wind directions K.

The first receiving module is further configured to receive a plurality of set of yaw angles values Θ. Each set of yaw angles comprises, for each wind turbines 15i, a respective yaw angle value $\theta_i$. As an example, these yaw angle values $\theta_i$ are random values.

The first receiving module 46 is further configured to obtain a parametrized model. The parametrized model is for example configured to be applied to each wind turbine 15i of the wind farm 10 in order to derive a rotation command $u_i$ respective of said wind turbine 15i.

The parametrized model is denoted as such, since it comprises parameters that can be tuned to make it reached some desired performances. The parametrized model is for example a neural network. The parametrized model that the first receiving module 46 is configured to obtain, is preferably naive. In other words, the parameters of such model are not tuned but initialized at a predetermined value, such as 1.

More preferably, the neural network is a graph neural network, known *per se.*

The parametrized model is for example configured to receive, as input:

- a yaw angle $\theta_i$ of each wind turbine 15i, and
- an indicator of the wind turbine 15i to which the parametrized model is applied to,

Based on the such inputs, the parametrized model is configured to provide, as output:

- a rotation command $u_i$ respective said wind turbine 15i to which it is applied.

Preferably, the model is configured to determine the rotation command $u_i$ among a predefined set of possible rotation commands $\left\{u_i^1, u_i^2, ..., u_i^N\right\}$.

Preferably again, the model is further configured to provide, as output an estimation of the power generated by the wind farm 10 wherein each wind turbine 15i follows the appropriate rotation command $u_i$.

The neural network comprises an ordered succession of layers of neurons, each of which takes its inputs from the outputs of the previous layer.

More precisely, each layer comprises neurons taking their inputs from the outputs of the neurons in the previous layer, or from the input variables for the first layer.

Alternatively, more complex neural network structures can be envisaged with a layer that can be linked to a layer further away than the immediately preceding layer.

Each neuron is also associated with an operation, i.e. a type of processing, to be performed by said neuron within the corresponding processing layer.

Each layer is connected to the other layers by a plurality of synapses. A synaptic weight is associated with each synapse, thus forming the tunable parameters, and each synapse forms a link between two neurons. This is often a real number, taking on both positive and negative values. In some cases, the synaptic weight is a complex number.

Each neuron is able to perform a weighted sum of the value(s) received from the neurons of the preceding layer, each value then being multiplied by the respective synaptic weight of each synapse, or link, between said neuron and the neurons of the preceding layer, then to apply an activation function, typically a non-linear function, to said weighted sum, and to deliver at the output of said neuron, in particular to the neurons of the following layer connected to it, the value resulting from the application of the activation function. The activation function introduces a non-linearity into the processing performed by each neuron. The sigmoid function, the hyperbolic tangent function and the Heaviside function are examples of activation functions.

As an optional complement, each neuron is also able to apply a multiplicative factor, also known as bias, to the output of the activation function, and the value output by said neuron is then the product of the bias value and the value output by the activation function.

In the example wherein the parametrized model is a neural network, it preferably comprise, in its input layer, a neuron for each wind turbine 15i configured to receive the yaw angle $\theta_i$ of said wind turbine 15i, and a respective neuron, or a plurality of neurons, to receive the indicator of the wind turbine 15i to which the parametrized model is applied to.

In that case, the model preferably comprises, in its output layer, a neuron for each rotation command $u_i$ of the set of possible rotation commands $\left\{u_i^1, u_i^2, ..., u_i^N\right\}$, and a respective neuron for the estimation of the power generated by wind farm 10. Advantageously, the model is configured to provide a vector comprising a component of each rotation command $u_i$ of the set of possible rotation commands $\left\{u_i^1, u_i^2, ..., u_i^N\right\}$, each component being comprised between 0 and 1. The sum of these components is preferably equal to 1. Then, each component represents a probability to chose the corresponding rotation command $u_i$. The model is preferably configured to determine the rotation command $u_i$ as the one of the set of possible rotation commands $\{u_i^1, u_i^2, ..., u_i^N\}$ with the highest probability.

The first receiving module 46 is preferably configured to obtain, a geographic configuration of the wind farm 10. The geographic configuration includes coordinates of each wind turbine 15i of the wind farm 10 with respect to each other wind turbines 15i.

The first calculating module 47 is configured to determine an ordered list O of wind turbines 15i of the wind farm 10 based on the wind direction K, and optionally from the yaw angles $\theta_i$.

The ordered list O comprises the list of wind turbines 15i in the order in which the wind, following the wind direction K, reaches them in the geographic configuration.

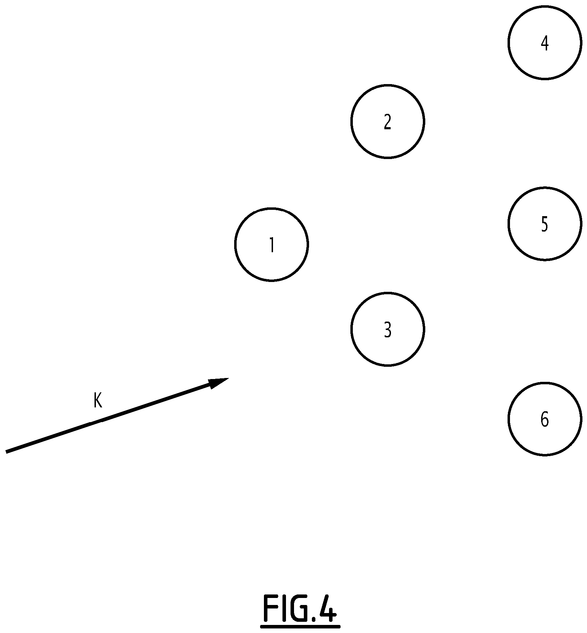

To illustrate it, Figure 4 illustrates a geographic configuration of the wind farm 10 of Figure 1. To simplify the understanding, the represented wind farm 10 only comprises six wind turbines 15i numbered 1 to 6. The arrow represents the wind direction K. As it can be seen, the wind reaches the different wind turbines in a specific order. This order corresponds to the order of the ordered list O. In this example, the ordered list O would be [1, 3, 2, 6, 5, 4].

In the embodiment wherein several wind directions K are obtained by the first receiving module 46, the first calculation module 47 is configured to determine an ordered list O respective of each wind direction K.

The first calculating module 47 is further configured to train the parameterized model according to a reinforcement learning algorithm based on the wind velocity V and wind direction K, to maximize the estimated power P generated by the wind farm. The reinforcement learning algorithm comprises several iterations, each of them including determining, for each turbine 15i, a respective rotation command $u_i$ based on the parameterized model. Such determination is performed sequentially on the wind turbines 15i according to the ordered list O of wind turbines 15i.

This training will be further detailed in reference to a control method 100 implemented by the control system 20. The model resulting from the training is further denoted: trained model.

In the embodiment wherein the first receiving module 46 is configured to obtain a plurality of wind directions K and velocities V, the first calculating module 47 is preferably configured to train one model for each couple of wind direction K and wind velocity V, resulting in a trained model for each of said couples.

The first sending module 48 is configured to send, to the electronic control device 45, the trained model.

Optionally, the first sending module 48 is further configured to send the ordered list O to the electronic control device 45.

The optional second receiving module 55 is preferably configured to receive the current yaw angle $\theta_i$ of each wind turbine 15i, preferably from the yaw actuator 40.

Preferably, the second receiving module 55 is in addition configured to receive, from the wind sensor 50, the current values of the wind direction K and of the wind velocity V.

The second calculating module 60 is preferably configured to apply the trained model to each wind turbine 15i to obtain a respective rotation command $u_i$. Details regarding this application will be provided in reference to the control method 100.

The second sending module 65 is configured to send, to each yaw actuator 40, the respective rotation command $u_i$, so that said yaw actuator 40 implement it.

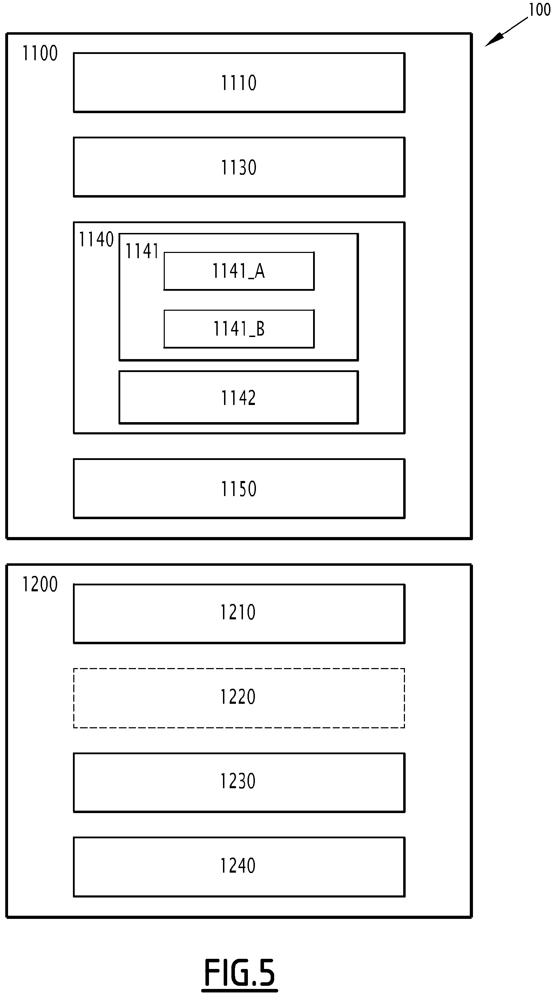

The functioning of the wind farm 10 and in particular of the control system 20 will now be detailed in reference to figure 5 illustrating a flowchart of the control method 100.

The control method 100 comprises a learning phase 1100 implemented by the learning device 43, and an exploitation phase 1200 implemented by the control device 45. Preferably, the learning phase 1100 is implemented in labs, before the exploitation phase 1200.

The learning phase 1100 comprises an obtaining step 1110, wherein the first receiving module 46 obtains values of wind direction K and of wind velocity V. During the obtaining step 1110, the first receiving module 46 obtains the parameterized model. During the obtaining step 1110, the first receiving module 46 in addition obtains the sets of yaw angle values $\Theta$.

Preferably, during the obtaining step 1100, the geographic configuration is also obtained by the first receiving module 46.

The learning phase 1100 further comprises a determining step 1130, wherein the first calculating module 47 determines the ordered list O of wind turbines 15i as previously detailed.

The learning phase 1100 further comprises a training step 1140 wherein the first calculating module 47 trains the parameterized model according to a reinforcement learning algorithm based on the wind velocity V and wind direction K values, to maximize the power P generated by the wind farm 10.

Preferably, the training step 1140 comprises a forming sub step 1141 wherein the first calculating module 47 forms training data, and a training sub step 1142 wherein the first calculating module 47 actually trains the model from the formed training data.

Preferably, the forming data sub step 1141, which is detailed below is iterated for each of the obtained set of yaw angle values $\Theta$.

The forming sub step 1141, comprises, for each wind turbine 15i in the sequence of the ordered list O, a forming action 1141_A, wherein the first calculating module 47 forms a decision tree. In other words, in the previous example of ordered list, the first calculating module 47 firstly form the decision tree corresponding to the wind turbine numbered 1, then the decision tree respective of the wind turbine numbered 3, etc.

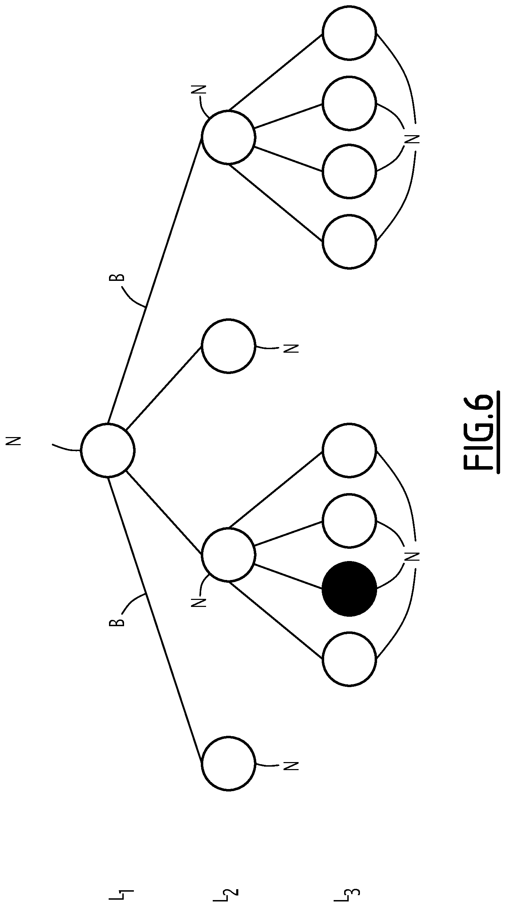

The forming action 1141_A will be explained in reference to Figures 6, 7 and 8.

Each decision tree starts from the considered wind turbine 15i and comprises several levels $\{L_1, L_2, \dots, L_J\}$ of nodes N, and branches B connecting a node N from a lower level $L_i$ to a node N of the corresponding upper level $L_{i+1}$.

Each level $L_i$ corresponds to a respective wind turbine 15i, the levels $\{L_1, L_2, \dots, L_J\}$ being ordered as in the ordered list O. Each branch B linking a node N of level $L_i$ to a node N of level $L_{i+1}$, corresponds to a rotation command $u_i$ of the set of possible rotation commands $\left\{u_i^1, u_i^2, \dots, u_i^N\right\}$ respective of the considered node N of level $L_i$.

Each decision tree associates, to its first node N, a quantifier Q representative of a power generated by the wind farm 10, and a vector of probabilities. Preferably, the decision tree associates to each of its nodes N a respective quantifier $Q_N$, and a visit counter $C_N$ that will be detailed below.

The vector of probabilities is determined based on the corresponding decision tree, and comprising for each rotation command $u_i$ of the set of possible rotation commands $\left\{u_i^1, u_i^2, \dots, u_i^N\right\}$, a probability of choosing said command.

Preferably, the forming action 1141_A is performed based on a tree search technic, derived from the Monte Carlo Tree Search technic. The Monte Carlo Tree Search technic, also denoted MCTS, is known *per se.*

Preferably, the forming action 1141_A is divided in four sub actions that are iterated several times.

These actions will be detailed for the first wind turbine 15i in the ordered list O of wind turbines 15i.

Initially, the tree only contains one node N, denoted root node, which corresponds to the wind turbine 15i for which the decision is going to be built, i.e. to the first wind turbine 15i. Initially also, the quantifier Q associated to the root node is preferably initialized to a predetermined value such as 0.

Further, new nodes N, and new branches B will be added by linking said new node N to an already existing node N of a lower layer $L_{i-1}$. A node that is not connected, through a branch B, to a node of a upper layer $L_{i+1}$ is further denoted: leaf node.

In reference to Figure 6, the first sub action is denoted: "selection". It comprises, starting from the root node, selecting successive branches B until reaching a leaf node. Such selection is for example based on the parameterized model and on the quantifier Q of the root node, preferably on the quantifier $Q_N$ of each node N, more preferably according to the following formula:

$$u_i = argmax_{u_i^j}\left(Q_N\left(u_i^j\right) + \alpha * P_N\left(u_i^j\right)\frac{\sqrt{C_N}}{1 + C_N\left(u_i^j\right)}\right)$$

where $u_i^j$ is a rotation command among the set of possible rotation commands with index j evolving,

$Q_N\left(u_i^j\right)$ is the quantifier of the node N is the rotation command $u_i^j$. This value is evaluated from the decision tree,

$\alpha$ is a predetermined constant, denoted exploration constant,

$P_N\left(u_i^j\right)$ is the probability of choosing the rotation command $u_i^j$ by applying the parameterized model to the wind turbine corresponding to node N,

$C_N$ is the visit counter of node *N*, and

$C_N\left(u_i^j\right)$ is the visit counter of the node reached by applying the rotation command $u_i^j$ from node N.

In this thus clear that the selection of the different branches B takes into consideration the decision tree already built, via the visit counter of the quantifier, and the parametrized model via the probability of choosing rotation commands given by said model.

During this selection sub action, the first calculating module 47 increments the visit counter $C_N$ of each node N that is visited from the root node until the selected leaf node.

In Figure 6, the selected leaf node is represented as a filled circle.

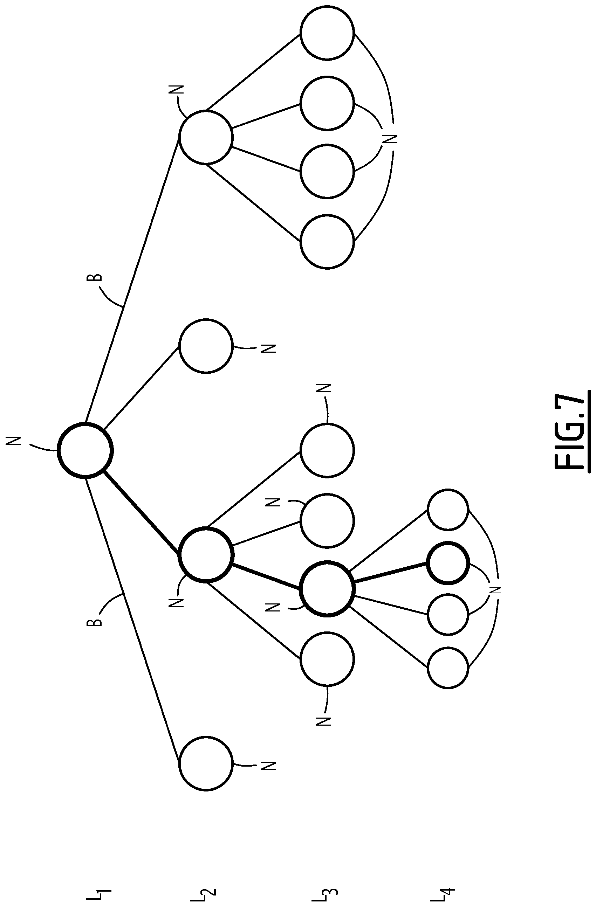

In reference to Figure 7, the second sub action is denoted: "expansion". It comprises expanding the decision tree from the selected leaf node N. Such expansion preferably comprises creating new branches B from the leaf node, and creating, for the next layer $L_{i+1}$, a respective node N for each new branch. In the present case, a branch B is created for each

rotation command $u_i$ of the set of possible rotation commands $\{u_i^1, u_i^2, \ldots, u_i^N\}$. Said new created nodes N are the new leaf nodes.

Before introducing the third sub action, it is important to note that, from each new leaf node N, it can be derived a respective path in the decision tree, starting from the root node, until said new leaf node. Each path provides a rotation command $u_i$, for each wind turbine 15i in the ordered list O, from the one of the rooting node, until the one before the leaf node.

Each path has the same rotation commands $u_i$ for each of wind turbine 15i except for the one corresponding to the wind turbine 15i preceding to one of the leaf node N in the ordered list O.

In figure 7, one specific path is represented in bold line.

Hence, said path neither provides a rotation command $u_i$ for the new leaf node, nor for wind turbines 15i that are ranked in the ordered list O, after the one of the leaf node.

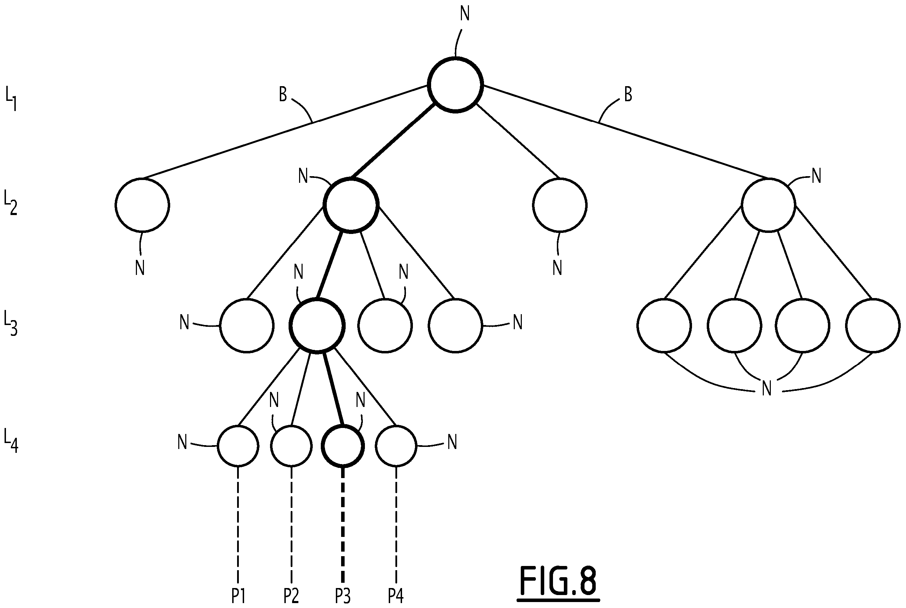

In reference to Figure 8, the third sub action is denoted : "prolonging".

It comprises applying the parametrized model to each of the new created node to determine, as output, a value corresponding to the generated power provided by the parametrized model. It has to be noted, that, while the model is not trained, this value does not generally corresponds to the power generated that the wind farm that the simulator would provide.

When applying the model, the inputs are preferably:

- the indicator of the wind turbine 15i to which the model is applied,
- the yaw angle of each wind turbine 15i.

The yaw angle of each wind turbine 15i in the input of the model is the yaw angle $\theta_i$ adjusted by the rotation command $u_i$ if the corresponding rotation command is yet determined.

In the previous example, if the leaf node corresponds to the third wind turbine 15i of the ordered list, the input yaw angles for determining the rotation command of this third wind turbine 15i, would be

$$[\theta_1 + u_1;\ \theta_3 + u_3; \theta_2; \theta_6; \theta_5; \theta_4]$$

In Figure 8, said values of the generated power given by the parametrized model are respectively denoted $P_1$, $P_2$, $P_3$, $P_4$

The fourth sub action is denoted: backpropagation. During this backpropagation sub action, the first calculating module 47 updates the quantifier Q associated to the first node N based on the determined generated power for said wind farm 10. Preferably, during this backpropagation sub action, the first calculating module 47 updates the quantifier $Q_N$ associated to each node N visited in said paths of the decision tree.

To this end, the first calculating module 47 preferably updates each quantifier $Q_N$ by taking the maximum between the previous value of said quantifier $Q_N$ and the values of power determined during the prolonging sub action.

These sub actions are iterated several times, thus expanding the size of the decision tree, until a predetermined computation time, or number of iteration, is reached.

The forming action 1141_A further comprises determining the vector of probabilities associated to the root node of said decision tree. Preferably, said vector of probabilities comprises, for each node N of the second layer, i.e. just after the root node, the respective visit counter $C_N$. The vector of probabilities is preferable normalized so that the sum of its component is equal to one.

One may note that, since each node N of the second layer $L_2$ is connected to the root node through a branch corresponding to a respective rotation command $u_i$ of the set of possible rotation commands, each component of the vector of probabilities corresponds to a probability to choose said rotation command for the wind turbine 15i corresponding to the root node.

During the forming action 1141_A, the first calculating module 47 then forms the decision tree respective to the new wind turbine 15i of the ordered list O of wind turbines 15i. During this new iteration, by construction, the decision tree comprises less layers since it does not comprises the layer, and node, corresponding to wind turbines 15i that are ranked, in the ordered list O, before the wind turbine 15i for which the decision tree is being formed.

Then, the forming of this new decision tree is similar as previously described, except that when the powers generated are estimated during the prolonging sub action, the yaw angles corresponding to wind turbines absent of the considered decision tree, are updated considering the rotation command $u_i$, having the biggest probability in the vector of probabilities determined when forming their respective decision tree.

Finally, after the forming action 1141_A, a decision tree has been formed for each wind turbine 15i in the ordered list O, and a respective vector of probabilities is associated to the root node of each of them. Since the root node of each decision tree correspond to a respective wind turbine 15i, each vector of probabilities is associated to the respective wind turbine 15i.

Back to figure 5, the sub step of forming training data 1141 further comprises a determining action 1141_B wherein the first calculating module 47 determines, for each decision tree a respective training data.

Each training data comprises input data, that corresponds to the input of the model, and output data, that corresponds to the output of the model.

Each training data comprises, as input:

- an indicator of the wind turbine relative to which the decision tree is formed, and
- yaw angle values $\theta_i$ derived from the considered set of yaw angle values ($\Theta$) and from the decision tree

More precisely, said yaw angle values $\theta_i$ are the yaw angle values of each wind turbine 15i from which the decision tree is formed.

In particular, it is clear that for decision trees formed for each wind turbine 15i except the first one in the ordered list O, the yaw angle of wind turbine preceding said wind turbine 15i in the ordered list O, is the yaw angle updated as in the prolonging sub action of the forming the decision tree. In other words, these yaw angles are the one updated by the rotation command having the biggest probability in the vector of probabilities of said preceding decision trees.

Each training data comprises, as output:

- the vector of probabilities of the corresponding decision tree, and
- the power generated by the wind farm estimated by the simulator considering each yaw angle $\theta_i$ updated by rotation command $u_i$ having the greatest probability in it respective vector of probability.

It is thus clear that the estimated power generated present in the output of the training data is the same between each of these training data.

At this end of this forming sub step 1141, a number J of training data are formed.

As already explain, preferably, the forming sub step 1141 is iterated for each set of yaw angles values $\Theta$, so that J training data are formed for each of these sets $\Theta$.

During the training sub step 1142, the first calculating module 47 trains the parameterized model from the training data. This training is preferentially performed according to well known learning technics, such a stochastic gradient descent.

Preferably, the forming sub step 1141 and the training sub step 1142 are iterated several times from the model that has already started to be trained. In that sense, the decision tree during further iterations is improved since the model started to learn how to provide a power value close the simulator for the power generated, and a vector of probabilities close the one formed from the visit counter.

After this training sub step 1142, and preferably at this end of these iterations, the parameters of the parameterized model are adjusted so that the model is further denoted: trained model.

The learning phase preferably comprises a sending step 1150 wherein the trained model is sent to the electronic control device 45.

Initially, during the exploitation phase 1200, the wind is flowing through the wind farm 10 according to the wind direction K and the wind velocity V. The wind sensor 50 measures the actual wind direction K and the wind velocity V reaching the wind farm 10. Each wind turbine 15i has an orientation with the wind direction K forming a yaw angle $\hat{\theta}_l$.

Preferably, the exploitation phase 1200 comprises a receiving step 1210, wherein the second receiving module 55 receives the trained model from the learning device 43.

In addition, during the receiving step 1210, the second receiving module 55 preferably receives the ordered list O.

In addition, during the receiving step 1210, the second receiving module 55 receives the current yaw angle $\theta_i$ of each wind turbines 15i, for example from the yaw actuator 40.

The exploitation phase 1200 then comprises an applying step 1230 wherein, the second calculating module 60 applies the trained model to each wind turbine 15i, to obtain a rotation command $u_i$ respective of each wind turbine 15i.

To this end, the second calculating module 60 preferably applies the trained model successively to each of the wind turbines 15i, according to the ordered list O.

In particular, for the first wind turbine 15i of the list O, the second calculating module 60 determines the respective rotation command $u_i$, by providing the following data as model input: the current yaw angle $\theta_i$ of each wind turbines 15i, and the indicator of the first wind turbine 15i in the ordered list O. The trained model thus providing, as output the vector comprising a value for each possible rotation command $u_i$ and the estimation of the generated power. The second calculating module 60 determines the rotation command of the considered wind turbine 15i as the rotation command corresponding to the highest value in the output vector.

For other wind turbines 15i, the second calculating module 60 determines the respective rotation command $u_i$ by providing the following data as model input: the indicator of the said considered wind turbine 15i in the ordered list O, and the current yaw angle $\theta_i$ of each wind turbines 15i wherein, said current yaw angle is updated with the already determined rotation command $u_i$ for wind turbines for which a rotation command $u_i$ has already been determined. Then, the calculating module 60 determines the corresponding rotation command $u_i$ in a similar way as for the first wind turbine 15i.

Optionally, during the applying step 1230, the second calculating module 60 builds the decision tree as in the forming sub step 1441 from the trained model and determines each rotation command $u_i$ as the one corresponding to the node having the greatest visit counter.

The exploitation phase 1200 further comprises a sending step 1240, wherein the second sending module 65 sends each rotation command $u_i$ to the respective wind turbine 15i for the rotation of the wind turbines 15i, preferably to the corresponding yaw actuator 40.

In another embodiment, during the obtaining step 1110, a plurality of wind direction values K and wind velocity values V are obtained. These values are for example obtained from an external device not-represented and may result from discretization of predetermined intervals as already detailed.

In this embodiment, the parametrized model further takes as input, the wind direction K and the wind velocity V.

During the determining step, a respective ordered list O is formed for each wind direction K.

Preferably, during the sending step 1150, each ordered list O is sent to the electronic control device 45.

In that case, during this receiving step 1210, each ordered list O. Still during the receiving step 1210, the second receiving module 55 receives, preferably from the wind sensor 50, the current wind direction K and the current wind velocity V.

The exploitation phase 1200 further comprises a selecting step 1220 wherein, the second calculating module 60 selects the appropriate ordered list O as a function current wind direction K. Since this step 1220 is only implemented in this embodiment, it is represented by dashed line in Figure 5.

Then, during the applying step 1230, the trained model is applied in the sequence of the ordered list O selected during the selecting sub step 1220.

In still another embodiment compatible with both previous embodiment, the model in addition takes, as input the local velocity $v_i$ at the contact of the considered wind turbine 15i.

In particular, in this embodiment, the wind sensor 50 is configured to estimated the wind velocity $v$ at the contact of each wind turbine 15i.

During the obtaining step 1110 and optionally the receiving step 1210, the local velocities $v_i$ are received instead of the velocity V.

During the other steps of the method 100, each time the velocity V is used, it is replaces by the corresponding local velocity $v_i$.

## Claims

1. A control method (100) for controlling a wind farm (10) comprising a plurality of wind turbines (15i), based on a wind velocity (V) and a wind direction (K),

   each wind turbine (15i) having an orientation (R) forming, with the wind direction (K), an angle denoted yaw angle ($\theta_i$),
   each wind turbine (15i) being configured, upon receiving a rotation command ($u_i$), to rotate, around an elongation axis (E) respective of the wind turbine (15i), according to said rotation command ($u_i$) to modify its yaw angle ($\theta_i$),
   the method (100) being implemented by an electronic control system (20) and comprising a learning phase (1100) including the following steps:

   - obtaining (1110) the wind direction (K), the wind velocity (V), sets of yaw angle values ($\Theta$), each set of yaw angle values ($\Theta$) comprising a yaw angle value ($\theta_i$) respective of each wind turbine (15i), and a parameterized model configured to determine a rotation command ($u_i$) for a specific wind turbine (15i) as a function of a yaw angle value ($\theta_i$) of each wind turbine (15i)
   - determining (1130) an ordered list (O) of wind turbines (15i) of the wind farm (10) based on the wind direction (K), and
   - training (1140) of the parametrized model according to a reinforcement learning algorithm based on the obtained wind velocity (V) an wind direction (K), to maximize a power (P) generated by the wind farm (10), the reinforcement learning algorithm comprising several iterations, each of them including determining, for each turbine (15i), a respective rotation command ($u_i$) based on the parameterized model, such determination being performed sequentially on the wind turbines (15i) according to the ordered list (O) of wind turbines (15i),

the model resulting from the training step (1140) being further denoted trained model,
the method (100) in addition comprising an exploitation phase (1200) including the following steps:

- receiving (1210) the current yaw angle ($\theta_i$) of each wind turbine (15i),
- applying (1230) the trained model to each wind turbine (15i), based on the received current yaw angles ($\theta_i$) to obtain a rotation command ($u_i$) respective of each wind turbine (15i), and
- sending (1240) each rotation command ($u_i$) to the respective wind turbine (15i) for the rotation of the wind turbines (15i).

2. The control method (100) according to claim 1, wherein during the obtaining step (1110), a geographic configuration of the wind farm (10) is obtained,

said geographic configuration including coordinates of each wind turbine (15i) of the wind farm (10) with respect to each other wind turbines (15i),
during the determining step (1130), the ordered list (O) comprising the list of wind turbines in the order in which the wind, following the wind direction (K), reaches them in the geographic configuration.

3. The control method (100) according to any of the preceding claims, wherein the parameterized model is a neural network.

4. The control method (100) according to any of the preceding claims, wherein the model is configured to determine the rotation command ($u_i$) among a predefined set of possible rotation commands $\left(\{u_i^1, u_i^2, \ldots, u_i^N\}\right)$,
the parameterized model being preferably configured to determine for each rotation command ($u_i$) of the set of possible rotation command $\left(\{u_i^1, u_i^2, \ldots, u_i^N\}\right)$, a respective probability of choosing said rotation command ($u_i$), the chosen rotation command ($u_i$) being the rotation command ($u_i$) with the highest probability.

5. The control method (100) according to the preceding claim, wherein the training step (1140) comprises a sub step of forming training data (1141) and a sub step (1142) of training the parametrized model based on the training data, the sub step (1141) of forming the training data comprising the following actions that are iterated for each set of yaw angle values ($\Theta$):

- for each wind turbine (15i) in the sequence of the ordered list (O), forming (1141_A) a decision tree, starting from the considered wind turbine (15i), comprising several levels ($\{L_1, L_2, \ldots, L_J\}$) of nodes (N), and branches (B) connecting a node (N) from a lower level ($L_i$) to a node (N) of the corresponding upper level ($L_{i+1}$),

each level ($L_i$) corresponding to a respective wind turbine (15i), the levels ($\{L_1, L_2, \ldots, L_J\}$) being order as in the order list (O),
each decision tree associating, to its first node (N), a quantifier (Q) representative of a power generated by the wind farm (10), and a vector of probabilities,
the vector of probabilities being determined based on the corresponding decision tree, and comprising for each rotation command ($u_i$) of the set of possible rotation commands $\left(\{u_i^1, u_i^2, \ldots, u_i^N\}\right)$, a probability of choosing said command,

- determining for each decision tree, respective training data comprising as input

  ○ yaw angle values ($\theta_i$) derived from the considered set of yaw angle values ($\Theta$) and from the decision tree
  ○ an indicator of the wind turbine relative to which the decision tree is formed and as output:

  - the vector of probabilities, and
  - the quantifier associated to the first node (N) of decision tree relative to the last wind turbine (15i) in the ordered list (O).

6. The control method according to claim 5, wherein the forming action (1141_A) is performed based on a tree search technic, derived from the Monte Carlo Tree Search technic.

7. The control method according to claim 6, wherein during the forming action (1141_A) the tree search technic comprises visiting several nodes (N) of the decision tree, the vector of probabilities associated to said decision tree depending on the number of visits of each node of the second level (L).

8. The control method according to claim 6 or 7, wherein, during the forming action (1141_A), the tree search technic comprises visiting successive nodes (N) of the decision tree by selecting several rotation commands ($u_i$) until a predetermined stopping criterion is met, thus defining a path (P) in the decision tree, said selection being based on the parametrized model,

    the tree search technic further comprising determining a value for each path based on the parameterized model, the tree search technic further comprising updating the quantifier (Q) associated to the first node (N) based on the determined values.

9. The control method according to claim 8, wherein for each wind turbine (15i) except the first one in the ordered list (O), during the forming action (1141_A), when determining the power generated by the wind farm (10), the rotation command ($u_i$) considered for wind turbine(s) (15i) preceding the considered one (15i) is(are) equal to the rotation command ($u_i$) with the highest value in the vector of probabilities associated to the decision tree of said preceding wind turbine (15i).

10. The control method (100) according to any of the preceding claims, wherein, during the applying step (1230) of the exploitation phase (1200), the trained model is applied sequentially to the wind turbines (15i) in the order of the ordered list (O).

11. The control method (100) according to any of the preceding claims, wherein during the obtaining step (1110), a plurality of wind directions (K) and wind velocities (V) are obtained,

    the parametrized model further taking as input, the wind direction (K) and the wind velocity (V),
    during the learning phase (1100), the determining step (1130) being iterated for each wind direction (K) and the training step (1140) being iterated for each couple of wind direction (K) and wind velocity (V),
    the operating phase (1200) further comprising:

      - receiving (1210) current values of wind direction (K) and wind velocity (V),
      - based the received current values, selecting (1220) the ordered list (O) corresponding to the current wind direction (K),

    during the applying step (1230), the trained model being applied in the sequence of the selected ordered list (O).

12. A set of computer-program products comprising software instruction, which, when being implement by computers, implements a method according to any of the preceding claims.

13. An electronic control system (20) for controlling a wind farm (10) comprising a plurality of wind turbines (15i), based on a wind velocity (V) and a wind direction (K), each wind turbine (15i) having an orientation (R) forming, with the wind direction (K), an angle denoted yaw angle ($\theta_i$),

    each wind turbine (15i) being configured, upon receiving a rotation command ($u_i$), to rotate, around an elongation axis (E) respective of the wind turbine (15i), according to said rotation command ($u_i$) to modify its yaw angle ($\theta_i$), the electronic control system (20) comprising an electronic learning device (43) comprising:

      - a first receiving module (46) configured to obtain the wind direction (K), the wind velocity (V), sets of yaw angle values ($\Theta$), each set of yaw angle values ($\Theta$) comprising a yaw angle value ($\theta_i$) respective of each wind turbine (15i), and a parameterized model configured to determine a rotation command ($u_i$) for a specific wind turbine (15i) as a function of a yaw angle value ($\theta_i$) of each wind turbine (15i),
      - a first calculating module (47) configured to determine an ordered list (O) of wind turbines (15i) of the wind farm (10) based on the wind direction (K),

    the first calculating module (47) being further configured to train the parametrized model according to a reinforcement learning algorithm based on the obtained wind velocity (V) an wind direction (K), to maximize a power (P) generated by the wind farm (10), the reinforcement learning algorithm comprising several iterations, each of them including determining, for each turbine (15i), a respective rotation command ($u_i$) based on the parameterized model, such determination being performed sequentially on the wind turbines (15i) according to the ordered list (O) of wind turbines (15i), the model resulting from the training step (1140) being further denoted trained model, the electronic control system (20) further comprising an electronic control device (45) comprising:

- a second receiving module (60) configured to receive the current yaw angle ($\theta_i$) of each wind turbine (15i),
- a second calculating module (65) configured to apply the trained model to each wind turbine (15i), based on the received current yaw angles ($\theta_i$) to obtain a rotation command ($u_i$) respective of each wind turbine (15i), and
- a sending module (65) configured to send each rotation command ($u_i$) to the respective wind turbine (15i) for the rotation of the wind turbines (15i).

FIG.1

**FIG.2**

**FIG.3**

FIG.4

100

1100

1110

1130

1140

1141

1141_A

1141_B

1142

1150

1200

1210

1220

1230

1240

## FIG.5

FIG.6

**FIG.7**

FIG.8

EP 4 768 717 A1

## EP 4 768 717 A1

**EUROPEAN SEARCH REPORT**

Application Number

EP 24 30 7344

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 792 484 A1 (SIEMENS GAMESA RENEWABLE ENERGY AS [DK]) 17 March 2021 (2021-03-17) * paragraphs [0010], [0013], [0030] - [0144] * ----- | 1-13 | INV. F03D7/02 F03D7/04 |
| X | PADULLAPARTHI VENKATA RAMAKRISHNA ET AL: "FALCON- FArm Level CONtrol for wind turbines using multi-agent deep reinforcement learning", RENEWABLE ENERGY, PERGAMON PRESS, OXFORD, GB, vol. 181, 10 September 2021 (2021-09-10), pages 445-456, XP086848004, ISSN: 0960-1481, DOI: 10.1016/J.RENENE.2021.09.023 [retrieved on 2021-09-10] * Sections 3 and 4 * ----- | 1-13 | |
| X | STANFEL PAUL ET AL: "A Distributed Reinforcement Learning Yaw Control Approach for Wind Farm Energy Capture Maximization*", 2020 AMERICAN CONTROL CONFERENCE (ACC), AACC, 1 July 2020 (2020-07-01), pages 4065-4070, XP033797520, DOI: 10.23919/ACC45564.2020.9147946 [retrieved on 2020-07-24] * Section II * ----- | 1-13 | |
| X | MONROC CLAIRE BIZON ET AL: "Actor Critic Agents for Wind Farm Control", 2023 AMERICAN CONTROL CONFERENCE (ACC), AMERICAN AUTOMATIC CONTROL COUNCIL, 31 May 2023 (2023-05-31), pages 177-183, XP034369845, DOI: 10.23919/ACC55779.2023.10156453 [retrieved on 2023-07-03] * the whole document * ----- | 1-13 | |

TECHNICAL FIELDS SEARCHED (IPC)

F03D

The present search report has been drawn up for all claims

| Place of search | Date of completion of the search | Examiner |
|---|---|---|
| The Hague | 11 June 2025 | Libeaut, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

EP 4 768 717 A1

## ANNEX TO THE EUROPEAN SEARCH REPORT
## ON EUROPEAN PATENT APPLICATION NO.

EP 24 30 7344

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| EP 3792484 | A1 | 17-03-2021 | CN | 114341488 A | 12-04-2022 |
| | | | EP | 3792484 A1 | 17-03-2021 |
| | | | EP | 3997335 A1 | 18-05-2022 |
| | | | US | 2022307468 A1 | 29-09-2022 |
| | | | WO | 2021052669 A1 | 25-03-2021 |

EPO FORM P0459

For more details about this annex : see Official Journal of the European Patent Office, No. 12/82

24